# FASCICULE DE BREVET EUROPEEN

(11) **EP 3 179 400 B1**
(45) Date de publication et mention de la délivrance du brevet: **12.04.2023**
(21) Numéro de dépôt: 16202743.7
(22) Date de dépôt: 07.12.2016
(51) Int. Cl.: G06F 21/74, G06F 21/64

(54) **PROCÉDÉ DE CHARGEMENT D'UNE RESSOURCE INFORMATIQUE AU SEIN D'UN DISPOSITIF ÉLECTRONIQUE, MODULE ÉLECTRONIQUE ET PROGRAMME D'ORDINATEUR CORRESPONDANT**
VERFAHREN ZUM HOCHLADEN EINER IT-RESSOURCE IN EINEM ELEKTRONISCHEN GERÄT, ELEKTRONISCHES MODUL UND ENTSPRECHENDES COMPUTERPROGRAMM
METHOD FOR LOADING A COMPUTING RESOURCE INTO AN ELECTRONIC DEVICE, ELECTRONIC MODULE AND CORRESPONDING COMPUTER PROGRAM

(30) Priorité: 07.12.2015 FR 1561948
(43) Date de publication de la demande: 14.06.2017
(73) Titulaire: Banks and Acquirers International Holding, 75015 Paris (FR)
(72) Inventeur: AUFFRAY, Christophe, 92500 RUEIL MALMAISON (FR)
(74) Mandataire: Vidon Brevets & Stratégie

(56) Documents cités:
- WO-A1-00/21238
- WO-A2-01/61437
- DE-A1- 10 350 993
- US-A1- 2003 196 102
- US-A1- 2004 054 952
- US-A1- 2008 209 556
- US-A1- 2012 331 303
- US-A1- 2013 117 578

## Description

### 1. Domaine

La présente technique se rapporte au domaine de la gestion du chargement et de l'exécution d'applications logicielles sur un terminal. Plus particulièrement, la présente technique se rapporte à l'accélération du chargement d'applications sécurisées pour un processeur d'un terminal, processeur qui peut lui même être sécurisé. L'invention vise à permettre un chargement plus rapide des applications en mémoire. L'invention se rapporte encore plus spécifiquement au chargement applicatif dans un terminal comme par exemple un terminal de paiement, qui dispose de capacités de traitement relativement réduites.

### 2. Art antérieur

Les terminaux électroniques, tels que des téléphones intelligents, dits smartphones, des tablettes numériques (tactiles) ou des terminaux de paiement embarquent fréquemment des applications dont certaines peuvent être des applications sensibles (comme des applications permettant une identification, une authentification ou encore un paiement). Il s'avère que ce type d'application est généralement enregistré au sein d'une mémoire de type "flash" par exemple sous une forme chiffrée. Ceci est courant et est dû à la nature des applications concernées. On rappelle qu'une mémoire "flash" est une mémoire de masse à semi-conducteurs réinscriptible. Il s'agit donc d'une mémoire qui possède certaines des caractéristiques d'une mémoire vive mais dont les données sont persistantes, même lors d'une mise hors tension. Une mémoire flash stocke ainsi les bits de données dans des cellules de mémoire et les données sont conservées en mémoire lorsque l'alimentation électrique de la mémoire est coupée.

La mémoire "flash" au sein de laquelle des applications peuvent être enregistrées peut-elle même être une mémoire sécurisée : ainsi une telle mémoire peut disposer de mécanismes physiques de protection qui permettent de détecter une éventuelle tentative d'intrusion (comme par exemple la pose de sondes de pour l'espionnage de signaux transitant par le composant électronique). Il résulte des précédentes que la mémoire en question (i.e. le composant électronique lui-même) dispose souvent d'une bande passante relativement réduite. Cela signifie par exemple que les temps de chargement sont relativement longs : d'une part le composant peut être lent en lui-même et d'autre part des processus de vérification de l'intégrité des données chargées ralentissent le chargement.

Par ailleurs, le problème qui vient d'être décrit pour une application peut également exister pour le système d'exploitation du terminal dans son ensemble. Ainsi, par exemple, tous les fichiers exécutables d'un système Linux (de type Android^{™}) sont entièrement chargés en mémoire vive au démarrage de ce système. Cela signifie que lorsque l'on dispose de composants mémoires relativement bon marché le chargement et la démarrage du système sont très long et ce sans même évoquer les processus de vérification de l'intégrité des données du système.

Lorsqu'un processus de vérification de l'intégrité des données du système est mis en oeuvre, l'authenticité des exécutables est vérifiée avant le chargement en mémoire vive et ce sur la totalité de l'exécutable et de ses données, ce qui ralentit encore plus le démarrage de l'appareil. La demande de brevet US201113166849A divulgue la vérification d'une signature de ressource pour tous les blocs de ladite ressource lors de son chargement.

Il est donc nécessaire de disposer d'une solution de chargement d'application ou de données (appelé d'une manière générale ressources) en mémoire qui permette de ne pas avoir à charger l'intégralité d'une ressource en mémoire afin d'en vérifier l'authenticité.

### 3. Résumé

L'invention ne pose pas ces problèmes de l'art antérieur. Plus particulièrement, l'invention apporte une solution simple à la problématique préalablement identifiée. Plus particulièrement, la technique se rapporte à un procédé de chargement d'une ressource informatique, par un dispositif comprenant un processeur et une mémoire vive, ledit chargement étant effectué au sein de ladite mémoire vive dudit dispositif à partir d'une mémoire de masse, ladite ressource étant enregistrée sur ladite mémoire de masse par l'intermédiaire d'au moins un bloc de données,

Un tel procédé comprend les étapes suivantes :
- obtention d'au moins une adresse correspondant à au moins un bloc de données au sein duquel la ressource est au moins partiellement enregistrée ;
et pour ladite au moins une adresse courante précédemment obtenue :
- chargement d'un bloc de données courant en fonction de ladite adresse courante ;
- obtention d'au moins un certificat de référence du bloc de données courant ;
- obtention d'au moins un certificat courant du bloc de données courant ;
- délivrance d'une assertion de validité en fonction dudit certificat de référence et du certificat courant ;

Ainsi, la présente technique permet d'une part d'accélérer le chargement de ressources, et d'autre part de limiter la dépense énergétique en ne chargeant que les ressources nécessaires à un instant donné.

Selon une caractéristique particulière, lorsque ladite assertion de validité est positive, ledit procédé comprend une étape de copie dudit bloc de données courant au sein de la mémoire vive dudit dispositif.

Ainsi, le chargement et l'utilisation ultérieure des ressources sont sécurisés.

Selon une caractéristique particulière, ladite étape d'obtention de ladite au moins une adresse comprend :
- une étape d'interception d'une requête d'obtention de ladite ressource ;
- une étape de détermination, en fonction d'une liste de ressources, de ladite au moins une adresse de ladite ressource ;

Ainsi, en utilisant un mécanisme d'interception, la mise en oeuvre du procédé de la présente technique est transparente pour l'application appelante.

Selon une caractéristique particulière, ladite liste de ressources est enregistrée au sein d'une mémoire sécurisée dudit dispositif.

Ainsi, l'accès à la liste de ressources est complexifié et permet de sécuriser le processus de chargement.

Selon une caractéristique particulière, ladite étape d'obtention d'au moins un certificat de référence du bloc de données courant comprend une étape de recherche dudit certificat de référence au sein d'une liste de ressources, en fonction de ladite adresse courante.

Ainsi, le certificat de référence est protégé dans la liste de ressource elle même.

Selon une caractéristique particulière, ladite étape d'obtention d'au moins un certificat de référence du bloc de données courant comprend une étape d'extraction dudit certificat de référence, à partir des données du bloc de données courant, données chargées à ladite adresse courante.

Ainsi, le certificat de référence accompagne le bloc de données à charger et ne prend pas une place excessive dans la liste des ressources.

Selon une caractéristique particulière, ladite étape d'obtention d'au moins un certificat de référence du bloc de données courant comprend une étape de chargement dudit certificat de référence à partir d'une adresse dudit certificat de référence, ladite adresse dudit certificat de référence étant obtenue à partir d'une liste de ressources dont au moins une entrée est associée à ladite adresse courante et à ladite adresse dudit certificat de référence.

Ainsi, un attaquant doit, pour réussir son attaque, à la fois réussir à remplacer le bloc de données et réussir à localiser et remplacer le certificat de référence qui y est attaché.

Selon un autre aspect, la présente technique se rapporte également à un module électronique de chargement d'une ressource informatique au sein d'un dispositif comprenant un processeur et une mémoire vive, ledit chargement étant effectué au sein de ladite mémoire vive dudit dispositif à partir d'une mémoire de masse, ladite ressource étant enregistrée sur ladite mémoire de masse par l'intermédiaire d'au moins un bloc de données. Selon la présente technique, ledit module comprend des moyens :
- d'obtention d'au moins une adresse correspondant à au moins un bloc de données au sein duquel la ressource est au moins partiellement enregistrée ;
- de chargement d'un bloc de données courant en fonction de ladite adresse courante ;
- d'obtention d'au moins un certificat de référence du bloc de données courant ;
- d'obtention d'au moins un certificat courant du bloc de données courant ;
- de délivrance d'une assertion de validité en fonction dudit certificat de référence.

Selon une implémentation spécifique, les différentes étapes des procédés selon l'invention sont mises en oeuvre par un ou plusieurs logiciels ou programmes d'ordinateur, comprenant des instructions logicielles destinées à être exécutées par un processeur d'un dispositif informatique, tel qu'un terminal, selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est un exemple de problème posé ;
- la figure 2 présente un synoptique de la technique proposée, dans laquelle un certificat de référence est comparé à un certificat courant afin de déterminer la validité d'un bloc de données chargé de manière dynamique lors de la réception d'une requête d'obtention d'une ressource ;
- la figure 3 décrit un premier mode de réalisation de la technique de stockage et de chargement, dans lequel la liste de ressources comprend un certificat de référence pour chaque bloc de données ;
- la figure 4 décrit un deuxième mode de réalisation de la technique de stockage et de chargement, dans lequel chaque bloc de données est suivi d'un certificat de référence ;
- la figure 5 décrit un troisième mode de réalisation de la technique de stockage et de chargement, dans lequel les certificats sont tous enregistrés à un emplacement mutualisé, pour l'ensemble des certificats, selon un ordre aléatoire ou semi aléatoire ; la liste des ressources comprend à la fois l'adresse du bloc de données et l'adresse du certificat ;
- la figure 6 décrit un dispositif, tel qu'un terminal de paiement, apte à mettre en oeuvre une ressource selon la présente technique.

### 5. Description

### 5.1. Rappels du principe

On rappelle que l'un des problèmes auquel la présente technique souhaite apporter une solution est lié à la nécessité d'effectuer un chargement complet des ressources pour vérifier l'authenticité de celles-ci avant leur utilisation. Le terme ressources, dans la présente, se rapporte tout autant à des données de code exécutable (c'est à dire des applications) qu'à des données utilisées par ce code exécutable (données applicatives).

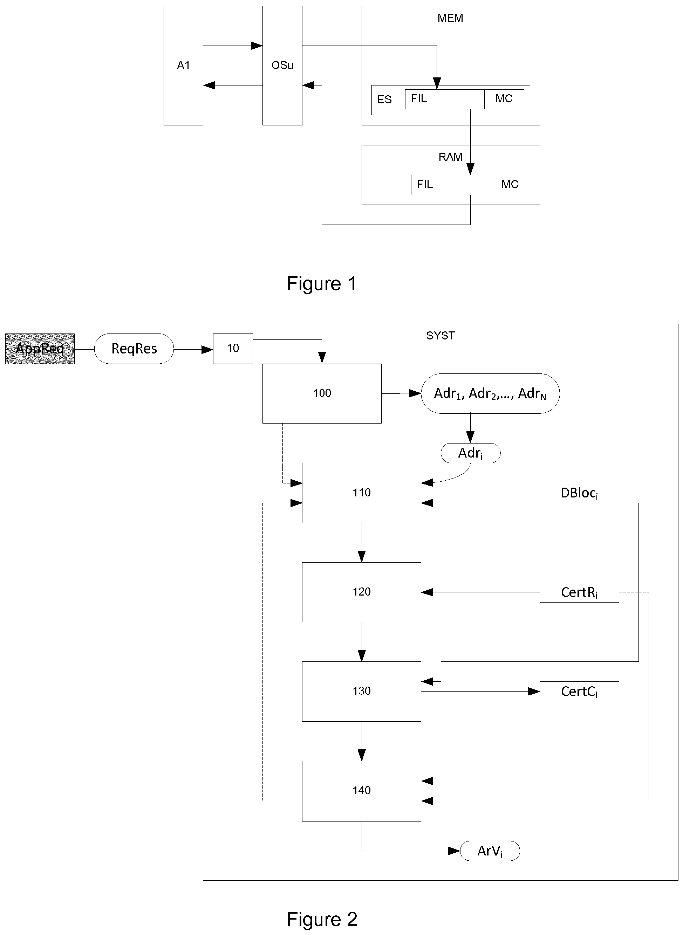

Pour mieux percevoir la problématique résolue, on décrit, en référence à la figure 1, un exemple, purement illustratif, auquel la présente technique peut s'appliquer.

Ainsi, on suppose une application A1, qui est exécutée sur un processeur (par exemple un processeur sécurisé) d'un terminal de paiement. Cette application *A1* souhaite accéder à un matériel cryptographique (par exemple une clé de chiffrement) *MC* enregistré au sein d'une mémoire physique *MEM* du terminal. Ce matériel cryptographique *MC* fait lui-même partie d'un fichier *FIL* qui est enregistré au sein d'un espace spécifique *ES* de la mémoire *MEM.* Pour pouvoir accéder au matériel cryptographique *MC*, l'application *A1* fait appel au système d'exploitation *OSu* (par exemple par l'intermédiaire d'un mécanisme d'interruption), qui effectue un chargement du fichier *FIL* en mémoire vive *RAM* afin que l'application *A1* puisse accéder à celui-ci et en extraire le matériel cryptographique *MC*. Le chargement du fichier *FIL* dans la mémoire est précédé de la vérification d'authenticité de ce fichier *FIL.* Cette vérification d'authenticité est effectuée sur l'intégralité du fichier *FIL.* Ainsi, par exemple, un matériel cryptographique (une clé) dont la longueur serait de un mégaoctet et qui est stockée dans un fichier comprenant une vingtaine d'autre matériels de même longueur nécessite la vérification et le chargement de l'ensemble du fichier pour pouvoir accéder à un unique matériel. Il en résulte une perte de temps conséquente ainsi qu'une perte d'énergie tout aussi conséquente (perte conduisant à une réduction de l'autonomie générale du terminal).

Cet exemple permet de comprendre, de manière simple, la problématique à laquelle la technique souhaite apporter une solution. Il est bien évident que les cas réels de mise en oeuvre sont relativement plus complexes.

La technique proposée permet de résoudre les problèmes susmentionnés ou à tout le moins de limiter fortement le temps nécessaire au chargement de données dont l'authenticité doit être vérifiée. La technique est décrite en relation avec la figure 2. D'une manière générale, postérieurement de la réception (*10*), en provenance d'une application requérante (*AppReq*), de la requête d'obtention d'une ressource (*ReqRes*) (par exemple le matériel cryptographique), le système (*SYST*) (d'exploitation ou de chargement) :
- obtient (*100*) au moins une adresse (*Adr₁, Adr₂,..., Adr_{N}*) correspondant à au moins un bloc de données (*DBloc₁, DBloc₂,..., DBloc_{N}*) au sein duquel la ressource est présente ; et
- pour chacune des adresses (*Adr₁, Adr₂,..., Adr_{N}*) précédemment obtenues :
   - chargement (*110*) d'un bloc de données courant *(Delocᵢ)* correspondant à une adresse courante *(Adrᵢ) ;*
   - obtention (*120*) d'au moins un certificat de référence *(CertRᵢ)* du bloc de données courant *(DBlocᵢ) ;*
   - obtention (*130*) d'au moins un certificat courant *(CertCᵢ)* du bloc de données courant *(DBlocᵢ) ;*
   - délivrance (*140*) d'une assertion de validité *(ArVᵢ)* en fonction dudit certificat de référence *(CertRᵢ)* et du certificat courant *(CertCᵢ) ;*

Lorsqu'un certificat courant ne correspond pas à un certificat de référence pour une adresse donnée, l'assertion de validité est négative. Le bloc chargé est dès lors rejeté et n'est pas recopié en mémoire vive. Ce bloc n'est donc pas exploité. Lorsque le certificat courant est égal au certificat de référence, l'assertion de validité est positive ; Le bloc est recopié en mémoire vive et peut être exploité.

Quand une ressource nécessite le chargement de plusieurs blocs de données (car la ressource est plus volumineuse que le volume d'un bloc), il suffit qu'une seule assertion de validité soit négative pour que tous les blocs soient rejetés. La ressource n'est ainsi pas chargée en mémoire. Deux cas peuvent alors se produire : soit l'appelant (c'est à dire l'application ou le système de chargement) est en mesure de gérer l'absence de la ressource requise et l'exécution se poursuit normalement; soit l'appelant n'est pas en mesure de gérer l'absence de la ressource et l'exécution se termine par une exception conduisant à l'arrêt de l'appelant (arrêt de l'application ou arrêt du système).

Selon un mode de réalisation spécifique, lorsqu'une assertion est négative pour un bloc courant, le bloc courant est à nouveau rechargé, c'est à dire que les données correspondant à ce bloc sont lues une deuxième fois. Un nouveau certificat est alors calculé sur les données lues une deuxième fois. Lorsque l'assertion est à nouveau négative, le bloc courant est définitivement rejeté. Une telle technique, de double vérification permet de se prémunir des lectures défectueuses, qui sont dues, par exemple, à une dégradation de la mémoire physique.

Ainsi, cette technique permet de ne contrôler que les données utiles et non pas l'ensemble des informations stockées sur le support physique. On obtient ainsi d'un gain de temps important par exemple lors de l'accès à une ressource protégée (données enregistrée sur une mémoire protégée) ou bien lors du chargement complet d'un système (par exemple lors d'un démarrage de terminal). L'authentification n'est réalisée que sur la ressource (application ou donnée) nécessaire au fonctionnement. Ainsi, les ressources ne sont contrôlées qu'au fur et à mesure de leurs utilisations et non en totalité en une seule et même passe.

Des modes de réalisation spécifique de la présente technique sont décrits par la suite. Ils présentent plusieurs manières d'effectuer le chargement des ressources, à la demande, en fonction de la manière dont le certificat de référence est enregistré. Ces différents modes de réalisation permettent de répondre à des problématiques d'accès aux ressources ou de stockages différentes.

### 5.2. Description d'un mode de réalisation

Dans ce mode de réalisation, la technique précédemment décrite est mise en oeuvre pour accélérer le démarrage d'un terminal de paiement. À toute fins utiles, on rappelle qu'un terminal de paiement se présente sous la forme d'un dispositif comprenant un boitier et au moins une carte électronique appelée carte mère. Un terminal de paiement comprend également un processeur de traitement sécurisé et une mémoire sécurisée. Ce processeur sécurisé et cette mémoire sécurisée sont disposés au sein d'une enceinte sécurisée dans le terminal. Le terminal de paiement comprend également un clavier (il s'agit généralement d'un clavier comprenant des touches physiques) et un écran. Le clavier est souvent utilisé pour effectuer des opérations de saisie (par le commerçant, par exemple pour effectuer la saisie d'un montant à payer pour l'utilisateur, et par l'utilisateur par exemple pour saisir un code confidentiel de carte bancaire). L'écran est utilisé pour effectuer un affichage de données, ces données étant par exemple les données permettant l'interaction avec le commerçant ou l'utilisateur. Des mécanismes sont implantés pour assurer le contrôle exclusif de l'écran et du clavier lors des opérations de paiement.

Le terminal de paiement comprend également, de manière optionnelle, un processeur non sécurisé, appelé parfois processeur multimédia ou processeur applicatif et une mémoire également non sécurisée, utilisée par ce processeur applicatif. Le processeur applicatif est généralement en charge de l'exécution d'applications connexes aux fonctions de paiement. Ainsi, le processeur applicatif peut par exemple être en charge de l'exécution d'applications dites de fidélité ou encore des applications publicitaires.

Pour fonctionner, le terminal de paiement dispose d'un logiciel appelé système d'exploitation. Le système d'exploitation es généralement chargé, au démarrage du terminal, à partir d'une mémoire de masse sur lequel il est enregistré. Par ailleurs, dans la plupart des cas, le système d'exploitation utilisé est un système de type linux. Un tel type de système se prête bien à une mise en oeuvre de la présente technique : en effet, sur les systèmes de type linux, tous les fichiers exécutables du système sont intégralement chargés en mémoire vive au démarrage. L'authenticité de tous les exécutables est vérifiée avant le chargement de ceux-ci en mémoire vive et ce sur la totalité de l'exécutable et de ses données, ce qui ralentit le démarrage de l'appareil. En effet, du fait de la criticité des opérations menées sur le terminal de paiement, il est nécessaire de vérifier cette authenticité au démarrage. Cette exigence provient notamment de normes et de spécifications appliquées par les fabricants de terminaux : le respect de ces normes permet de recevoir des certifications qui sont souvent indispensables pour pouvoir vendre le terminal de paiement à des clients.

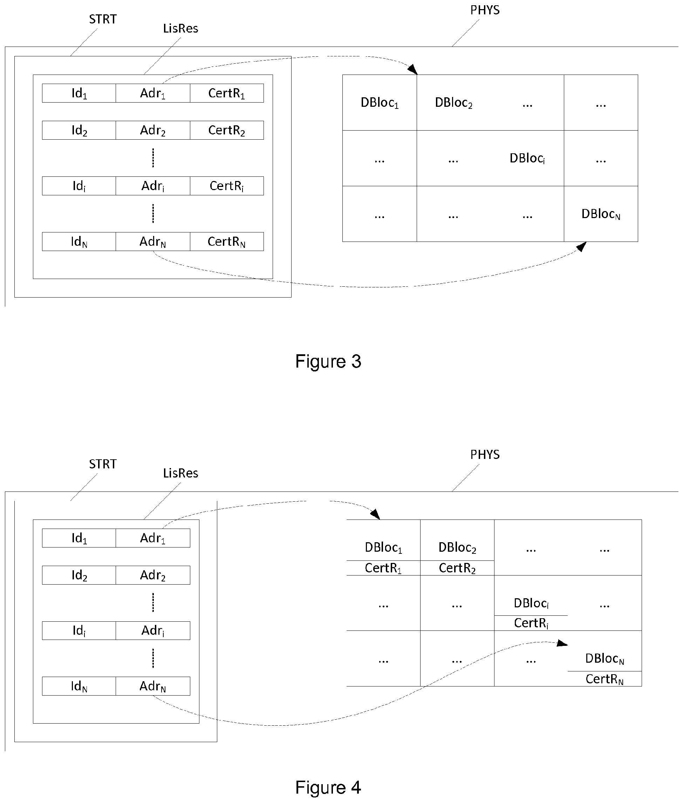

Pour pouvoir réduire le temps de démarrage du terminal, on utilise donc, dans le présent mode de réalisation, un bootloader (programme de chargement) qui met en oeuvre la présente technique. Ce programme de chargement effectue, de manière traditionnelle, le chargement des ressources en mémoire vive. Les figures 3 et 4 illustrent la description qui suit, selon deux modes de réalisation différents.

Pour ce faire, le gestionnaire de démarrage dispose d'une liste de ressources à charger (*LisRes*)*.* Cette liste de ressources est inscrite au sein (ou accessible à partir) d'un secteur de démarrage (*STRT*) d'un volume physique (*PHYS*) d'une mémoire de masse du terminal de paiement. Plus particulièrement, cette liste (*LisRes*) est enregistrée de manière sécurisée (et éventuellement chiffrée) : elle contient les ressources à charger, l'ordre de chargement de ces ressources ; pour chacune de ces ressources, la liste comprend à minima une adresse de localisation (Adr₁, Adr₂, etc.) (sur le volume physique) correspondant à un bloc de données (DBloc₁, DBloc₂, etc.). En fonction de la taille de la ressource, plusieurs adresses de blocs peuvent être nécessaires.

Par ailleurs, pour chaque bloc, un certificat de référence (CertRᵢ) peut être présent au sein de la liste de ces ressources (LisRes). Un certificat de référence se présente typiquement sous la forme d'une signature numérique. Cette signature numérique est obtenue de la manière suivante : les données correspondant au bloc sont hachées (avec une fonction de hachage qui peut être connue en elle-même) ce qui délivre une empreinte et un chiffrement est appliqué sur cette empreinte ce qui délivre la signature numérique chiffrée (ou certificat).

Alternativement, il est possible de ne pas disposer, dans la liste de ces ressources (LisRes), d'un certificat de référence (CertRᵢ) pour chaque bloc de donnée. Dans ce cas, les blocs de données sont signés numériquement et contiennent leurs propres signatures, comme illustré en figure 4. Chaque bloc de données se présente sous la forme d'un ensemble de données comprenant d'une part des données de ressource et d'autre part une signature numérique (CertRᵢ) de ces données de ressource. Cette signature numérique est le résultat :
- d'une fonction de hachage appliquée sur les données de bloc, délivrant un haché ;
- d'une fonction de chiffrement à clé privée de ce haché.

Le premier cas, figure 3, dans lequel certificat de référence (CertRᵢ) est associé à chaque bloc dans la liste de ces ressources (LisRes) présente un avantage en termes de sécurité car on dispose directement du certificat. Cependant, ce mode de réalisation nécessite plus de place au niveau du secteur de démarrage, ce qui peut poser problème dans certaines configurations matérielles ou cette place est peu importante.

L'alternative, figure 4, présente l'avantage de ne pas nécessiter trop de place au niveau du secteur de démarrage. Les données des blocs sont signées numériquement à l'avance et intégrées au bloc au moment de son écriture (lors de la fabrication du terminal ou lors de son paramétrage). En revanche cette solution pourrait être légèrement moins sécuritaire : il est possible qu'un attaquant, qui aurait connaissance de la clé privée servant à chiffrer les hachés, puisse effectuer à la fois le remplacement des données du bloc et le remplacement du certificat de ce même bloc, et ce en n'ayant à manipuler qu'un seul emplacement sur le support physique.

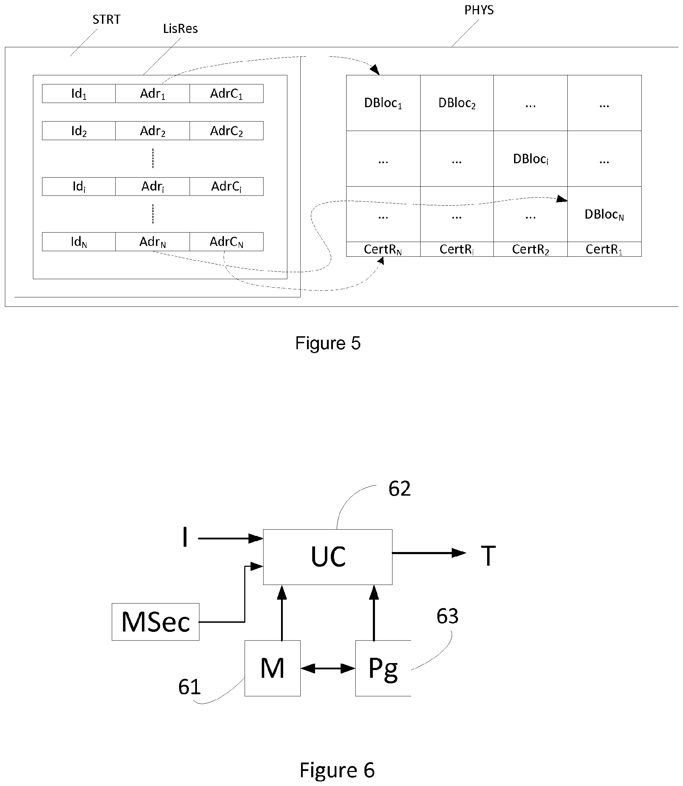

C'est pour cette raison qu'une deuxième alternative peut être envisagée, comme décrit en figure 5. Dans cette deuxième alternative, la liste de ressources (LisRes) comprend une adresse de localisation de chaque bloc, comme dans le premier et le deuxième cas. En sus, la liste de ressources (LisRes) contient, pour chaque bloc, une adresse de localisation du certificat. Le module de chargement effectue alors d'une part un chargement des données du bloc à l'adresse indiquée pour ces données et un chargement du certificat correspondant à ces données du bloc à l'adresse indiquée pour ce certificat. De manière complémentaire, les certificats sont disposés, sur le support physique, à des adresses qui ne correspondent pas nécessairement à l'ordre des blocs, et ce afin de ne pas permettre la découverte du certificat de manière itérative. Le positionnement des certificats sur le support physique est donc réalisé selon un ordre aléatoire ou pseudo aléatoire, dans une zone de positionnement prédéterminée. Avec cette deuxième alternative, on résout les problèmes des deux premiers modes de réalisation. Ce troisième cas n'est bien entendu intéressant que lorsque la longueur des adresses où les certificats sont enregistrés est inférieure à la taille du certificat lui-même. Si cela n'est pas le cas (i.e. taille du certificat inférieure ou égale à la taille de l'adresse), le premier mode de réalisation reste le plus intéressant.

Quelle que soit l'alternative choisie, le gestionnaire de chargement effectue un chargement des ressources, dans l'ordre indiqué dans la liste de ressources, en chargeant les blocs correspondant à ces ressources et en vérifiant l'authenticité de ces blocs (délivrance d'une assertion d'authenticité). Lorsqu'un bloc n'est pas authentique, il n'est pas copié en mémoire vive. Dans un mode de chargement sécurisé, le chargement est stoppé dès qu'une assertion d'authenticité est négative.

Concrètement, chaque bloc est lu de manière indépendante : le bloc en question est passé en entrée, par le module de chargement, à un module de vérification. Le module de vérification effectue un certain nombre de calculs sur la base du bloc reçu. Le module de vérification prend également en entrée un numéro ou une adresse de bloc ; Le numéro (ou l'adresse) sert à obtenir des données de référence au niveau de la liste. Ces données de référence peuvent être un certificat de référence (certificat correspondant au haché des données du bloc auquel est appliquée une fonction cryptographique à clé publique ou privée) : dans ce cas, le certificat est une signature numérique. Comme exposé précédemment, le certificat de référence peut être directement intégré dans la liste. Auquel cas, le module de vérification effectue un calcul cryptographique similaire sur les données du bloc : il calcule un haché sur les données du bloc courant et applique une fonction cryptographique à clé publique ou privée sur ce haché. Le module obtient ainsi un certificat courant et il compare ce certificat courant au certificat de référence. Si les deux correspondent, l'assertion de validité est positive. Dans le cas contraire, l'assertion de validité est négative et de le chargement est interrompu. L'avantage de ce mode de réalisation est de ne pas réduire l'espace de stockage de chaque bloc de données.

Dans la première alternative, le bloc de données passé au module de vérification comprend déjà sa propre signature numérique pré calculée (pré calculée en usine par exemple, lors de l'implantation du logiciel ou lors d'un paramétrage). Il n'est donc pas nécessaire d'effectuer ce calcul. La signature numérique est extraite des données et déchiffrée : on obtient ainsi un haché déchiffré (il s'agit du certificat de référence). Dès lors le module de vérification effectue un calcul de haché sur les données courantes du bloc (il s'agit donc du certificat courant). Si les deux correspondent, une assertion de validité positive est délivrée. Dans le cas contraire une assertion de validité négative est délivrée. L'avantage de ce mode de réalisation est de ne pas avoir besoin de certificats de références préenregistrés dans la liste, ce qui permet de disposer de plus d'espace de stockage dans la zone d'amorçage.

Dans la deuxième alternative, le module de vérification récupère le certificat à partir de l'adresse de celui-ci, fournie dans la liste, et effectue des calculs similaires ou identiques à ceux effectués précédemment, afin de délivrer les assertions d'authenticité.

### 5.3. Autres caractéristiques et avantages

On décrit, en relation avec la figure 6, un dispositif, tel qu'un terminal de paiement ou un smartphone. Un tel dispositif est configuré pour mettre en oeuvre un chargement de ressources selon le procédé décrit préalablement.

Par exemple, le dispositif comprend une mémoire 61 constituée d'une mémoire tampon, une unité de traitement 62, équipée par exemple d'un microprocesseur, et pilotée par le programme d'ordinateur 63, mettant en oeuvre un procédé de chargement de ressources.

À l'initialisation, les instructions de code du programme d'ordinateur 63 sont par exemple chargées dans une mémoire avant d'être exécutées par le processeur de l'unité de traitement 62. L'unité de traitement 62 reçoit en entrée au moins une donnée représentative d'un identifiant de ressource à charger. Le microprocesseur de l'unité de traitement 62 met en oeuvre les étapes du procédé de chargement de ressources, selon les instructions du programme d'ordinateur 63 pour copier, en mémoire vive, le contenu d'un ou plusieurs blocs de données enregistrés sur un support physique en vérifiant, bloc par bloc l'authenticité de ceux-ci, afin de ne charger, à un instant donné, que les blocs dont l'utilisation est requise au regard de la ressource demandée.

Pour cela, le dispositif comprend, outre la mémoire tampon 61, des moyens de communications, des moyens de transmission de donnée et éventuellement un processeur de chiffrement. Lorsqu'un processeur de chiffrement est mis en oeuvre, il s'agit avantageusement d'un processeur sécurisé, ayant accès à une mémoire sécurisée (Msec) au sein de laquelle, une liste de ressources est enregistrée. Cette liste de ressource est accessible au processeur de chiffrement afin de permettre une comparaison d'un certificat de référence et d'un certificat courant, le certificat de référence étant enregistré au moment de l'initialisation ou du paramétrage du dispositif. Pour ce faire, le processeur comprend des moyens d'identification uniques. Ces moyens d'identification uniques permettent d'assurer l'authenticité du processeur.

Par ailleurs, le dispositif comprend en outre un circuit électronique permettant la gestion et l'interruption des requêtes d'accès à des ressources afin que ces requêtes ne soient traitées que lorsque les ressources en question ont été vérifiées selon le procédé de gestion précédemment décrit.

## Revendications

1. Procédé de chargement d'une ressource informatique, par un dispositif comprenant un processeur et une mémoire vive, ledit chargement étant effectué au sein de ladite mémoire vive dudit dispositif à partir d'une mémoire de masse, ladite ressource étant enregistrée sur ladite mémoire de masse par l'intermédiaire d'au moins un bloc de données, procédé **caractérisé en ce qu'**il comprend les étapes suivantes, pour chacun des au moins un bloc de données.
- obtention (100) d'au moins une adresse (Adr₁, Adr₂,..., Adr_{N}) correspondant à au moins un bloc de données (DBloc₁, DBloc₂,..., DBloc_{N}) au sein duquel la ressource est partiellement enregistrée ; ladite étape d'obtention (100) de ladite au moins une adresse (Adr₁, Adr₂,..., Adr_{N}) comprenant :
- une étape d'interception d'une requête d'obtention de ladite ressource ;
- une étape de détermination, en fonction d'une liste de ressources (LisRes), de ladite au moins une adresse (Adr₁, Adr₂,..., Adr_{N}) de ladite ressource, ladite liste de ressources (LisRes) étant enregistrée au sein d'une mémoire sécurisée (Msec) dudit dispositif ;
et pour ladite au moins une adresse courante (Adrᵢ) précédemment obtenue :
- chargement (110) d'un bloc de données courant (DBlocᵢ) en fonction de ladite adresse courante (Adrᵢ) ;
- obtention (120) d'au moins un certificat de référence (CertRᵢ) du bloc de données courant (DBlocᵢ), ledit certificat de référence étant une signature numérique chiffré dudit bloc de données courant ;
- obtention (130) d'au moins un certificat courant (CertCᵢ) du bloc de données courant (DBlocᵢ), ledit certificat courant étant une signature numérique chiffré dudit bloc de données courant ;
- délivrance (140) d'une assertion de validité (ArVᵢ) en fonction dudit certificat de référence (CertRᵢ) et du certificat courant (CertCᵢ), lorsque ledit certificat de référence et ledit certificat courant sont identiques ;
- copie dudit bloc de données courant (DBlocᵢ) au sein de la mémoire vive dudit dispositif, lorsque ladite assertion de validité (ArVᵢ) est positive.

2. Procédé de chargement selon la revendication 1, **caractérisé en ce que** ladite étape d'obtention (120) d'au moins un certificat de référence (CertRᵢ) du bloc de données courant (DBlocᵢ) comprend une étape de recherche dudit certificat de référence (CertRᵢ) au sein d'une liste de ressources (LisRes), en fonction de ladite adresse courante (Adrᵢ).

3. Procédé de chargement selon la revendication 1, **caractérisé en ce que** ladite étape d'obtention (120) d'au moins un certificat de référence (CertRᵢ) du bloc de données courant (DBlocᵢ) comprend une étape d'extraction dudit certificat de référence (CertRᵢ), à partir des données du bloc de données courant (DBlocᵢ), données chargées à ladite adresse courante (Adrᵢ).

4. Procédé de chargement selon la revendication 1, **caractérisé en ce que** ladite étape d'obtention (120) d'au moins un certificat de référence (CertRᵢ) du bloc de données courant (DBlocᵢ) comprend une étape de chargement dudit certificat de référence (CertRᵢ) à partir d'une adresse dudit certificat de référence (AdrCᵢ), ladite adresse dudit certificat de référence (AdrCᵢ) étant obtenue à partir d'une liste de ressources (LisRes) dont au moins une entrée est associée à ladite adresse courante (Adrᵢ) et à ladite adresse dudit certificat de référence (AdrCᵢ).

5. Module électronique de chargement d'une ressource informatique au sein d'un dispositif comprenant un processeur et une mémoire vive, ledit chargement étant effectué au sein de ladite mémoire vive dudit dispositif à partir d'une mémoire de masse, ladite ressource étant enregistrée sur ladite mémoire de masse par l'intermédiaire d'au moins un bloc de données, ledit module comprenant des moyens :
- d'obtention d'au moins une adresse (Adrᵢ,...,) correspondant à au moins un bloc de données (DBlocᵢ,...) au sein duquel la ressource est partiellement enregistrée, les moyens d'obtention de ladite au moins une adresse (Adrᵢ,...,) mettant en oeuvre des moyens :
- d'interception d'une requête d'obtention de ladite ressource ;
- de détermination, en fonction d'une liste de ressources (LisRes), de ladite au moins une adresse (Adrᵢ,...,) de ladite ressource, ladite liste de ressources (LisRes) étant enregistrée au sein d'une mémoire sécurisée (Msec) dudit dispositif.
- de chargement d'un bloc de données courant (DBlocᵢ) en fonction de ladite adresse courante (Adrᵢ).
- d'obtention d'au moins un certificat de référence (CertRᵢ) du bloc de données courant (DBlocᵢ), ledit certificat de référence étant une signature numérique chiffré dudit bloc de données courant ;
- d'obtention d'au moins un certificat courant (CertCᵢ) du bloc de données courant (DBlocᵢ), ledit certificat courant étant une signature numérique chiffrée dudit bloc de données courant ;
- de délivrance d'une assertion de validité (ArVᵢ) en fonction dudit certificat de référence (CertRᵢ) et dudit certificat courant (CertCᵢ), lorsque ledit certificat de référence et ledit certificat courant sont identiques ;
- de copie dudit bloc de données courant (DBlocᵢ) au sein de la mémoire vive dudit dispositif.

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de chargement selon la revendication 1, lorsqu'il est exécuté sur un ordinateur.

## Patentansprüche

1. Verfahren zum Laden einer IT-Ressource, durch eine Vorrichtung umfassend einen Prozessor und einen Arbeitsspeicher, wobei das Laden innerhalb des Arbeitsspeichers der Vorrichtung von einem Massenspeicher aus erfolgt, wobei die Ressource in dem Massenspeicher mittels eines Datenblocks registriert ist, wobei das Verfahren **dadurch gekennzeichnet ist, dass** es die folgenden Schritte für jeden der mindestens einen Datenblöcke umfasst:
- Erhalten (100) mindestens einer Adresse (Adr₁, Adr₂, ..., Adr_{N}) entsprechend mindestens einem Datenblock (DBloc₁, DBloc₂, ..., DBloc_{N}), in dem die Ressource teilweise registriert ist; wobei der Schritt des Erhaltens (100) der mindestens einen Adresse (Adr₁, Adr₂, ..., Adr_{N}) umfasst:
- einen Schritt des Abfangens einer Anforderung auf Erhalten der Ressource;
- einen Schritt des Bestimmens, in Abhängigkeit von einer Liste von Ressourcen (LisRes), der mindestens einen Adresse (Adr₁, Adr₂, ..., Adr_{N}) der Ressource, wobei die Liste von Ressourcen (LisRes) in einem sicheren Speicher (Msec) der Vorrichtung gespeichert ist;
und für jene mindestens eine zuvor erhaltene laufende Adresse (Adn):
- Laden (110) eines laufenden Datenblocks (DBlocᵢ) in Abhängigkeit der laufenden Adresse (Adn);
- Erhalten (120) mindestens eines Referenzzertifikats (CertRᵢ) des laufenden Datenblocks (DBlocᵢ), wobei das Referenzzertifikat eine verschlüsselte digitale Signatur des laufenden Datenblocks ist;
- Erhalten (130) mindestens eines laufenden Zertifikats (CertCᵢ) des laufenden Datenblocks (DBlocᵢ), wobei das laufende Zertifikat eine verschlüsselte digitale Signatur des laufenden Datenblocks ist;
- Ausgeben (140) einer Gültigkeitsaussage (ArVᵢ) in Abhängigkeit von dem Referenzzertifikat (CertRᵢ) und dem laufenden Zertifikat (CertCᵢ), wenn das Referenzzertifikat und das laufende Zertifikat identisch sind;
- Kopieren des laufenden Datenblocks (DBlocᵢ) innerhalb des Arbeitsspeichers der Vorrichtung, wenn die Gültigkeitsaussage (ArVᵢ) positiv ist.

2. Ladeverfahren nach Anspruch 1, **dadurch gekennzeichnet, dass** der Schritt des Erhaltens (120) mindestens eines Referenzzertifikats (CertRᵢ) des laufenden Datenblocks (DBlocᵢ) einen Schritt des Suchens des Referenzzertifikats (CertRᵢ) innerhalb der Liste von Ressourcen (LisRes) in Abhängigkeit der laufenden Adresse (Adrᵢ) umfasst.

3. Ladeverfahren nach Anspruch 1, **dadurch gekennzeichnet, dass** der Schritt des Erhaltens (120) mindestens eines Referenzzertifikats (CertRᵢ) des laufenden Datenblocks (DBlocᵢ) einen Schritt der Entnahme des Referenzzertifikats (CertRᵢ) aus den Daten des laufenden Datenblocks (DBlocᵢ) umfasst, Daten, wobei die Daten an die laufende Adresse (Adrᵢ) geladen wurden.

4. Ladeverfahren nach Anspruch 1, **dadurch gekennzeichnet, dass** der Schritt des Erhaltens (120) mindestens eines Referenzzertifikats (CertRᵢ) des laufenden Datenblocks (DBlocᵢ) einen Schritt des Ladens des Referenzzertifikats (CertRᵢ) von einer Adresse des Referenzzertifikats (AdrCᵢ) umfasst, wobei die Adresse des Referenzzertifikats (AdrCᵢ) von einer Liste von Ressourcen (LisRes) erhalten wird, von welcher mindestens ein Eintrag der laufenden Adresse (Adrᵢ) und der Adresse des Referenzzertifikats (AdrCᵢ) zugeordnet ist.

5. Elektronikmodul zum Laden einer IT-Ressources innerhalb einer Vorrichtung umfassend einen Prozessor und einen Arbeitsspeicher, wobei das Laden innerhalb des Arbeitsspeichers der Vorrichtung von einem Massenspeicher aus erfolgt, wobei die Ressource auf dem Massenspeicher über mindestens einen Datenblock registriert ist, wobei das Modul die folgenden Mittel umfasst:
- Mittel zum Erhalten mindestens einer Adresse (Adrᵢ, ...) entsprechend mindestens einem Datenblock (DBlocᵢ, ...), in dem die Ressource teilweise registriert ist, wobei die Mittel zum Erhalten der mindestens einen Adresse (Adrᵢ, ...) die folgenden Mittel einsetzen:
- Mittel zum Abfangen einer Anforderung auf Erhalten der Ressource;
- Mittel zur Bestimmung, in Abhängigkeit von einer Liste von Ressourcen (LisRes), der mindestens einen Adresse (Adrᵢ,...) der Ressource, wobei die Liste von Ressourcen (LisRes) in einem sicheren Speicher (Msec) der Vorrichtung gespeichert ist;
- Mittel zum Laden eines laufenden Datenblocks (DBlocᵢ) in Abhängigkeit der laufenden Adresse (Adn);
- Mittel zum Erhalten mindestens eines Referenzzertifikats (CertRᵢ) des laufenden Datenblocks (DBlocᵢ), wobei das Referenzzertifikat eine verschlüsselte digitale Signatur des laufenden Datenblocks ist;
- Mittel zum Erhalten mindestens eines laufenden Zertifikats (CertCᵢ) des laufenden Datenblocks (DBlocᵢ), wobei das laufende Zertifikat eine verschlüsselte digitale Signatur des laufenden Datenblocks ist;
- Mittel zum Ausgeben einer Gültigkeitsaussage (ArVᵢ) in Abhängigkeit des Referenzzertifikat (CertRᵢ) und dem laufenden Zertifikat (CertCᵢ), wenn das Referenzzertifikat und das laufende Zertifikat identisch sind;
- Mittel zum Kopieren des laufenden Datenblocks (DBlocᵢ) innerhalb des Arbeitsspeichers der Vorrichtung.

6. Computerprogrammprodukt, das aus einem Kommunikationsnetz herunterladbar und/oder auf einem von einem Computer lesbaren Träger gespeichert und/oder von einem Mikroprozessor ausführbar ist, **dadurch gekennzeichnet, dass** es Programmcodebefehle zum Ausführen eines Ladeverfahrens nach Anspruch 1, wenn jenes auf einem Computer ausgeführt wird, umfasst.

## Claims

1. Method for loading an information-processing resource by means of a device comprising a processor and a random-access memory, said loading being done into said random-access memory of said device from a mass memory, said resource being recorded in said mass memory by means of at least one block of data, **characterized in that** it comprises the following steps, for each of the at least one block of data:
- obtaining (100) at least one address (Adr₁, Adr₂,...,Adr_{N}) corresponding to at least one block of data (DBloc₁,DBloc₂,..., DBloc_{N}) within which the resource is partially recorded; said step (100) for obtaining said at least one address (Adr₁, Adr₂, AdrN) comprising:
- a step for intercepting a request for obtaining said resource;
- a step for determining said at least one address (Adr₁, Adr₂,...,Adr_{N}) of said resource as a function of a list of resources (LisRes), said list of resources (LisRes) being recorded into a secured memory of said device;
and for said at least one previously obtained current address (Adrᵢ):
- loading (110) a current block of data (DBlocᵢ) as a function of said current address (Adrᵢ);
- obtaining (120) at least one reference certificate (CertRᵢ) of the current block of data (DBlocᵢ), said reference certificate being an encrypted digital signature of said current data block;
- obtaining (130) at least one current certificate (CertCᵢ) of the current block of data (DBlocᵢ), said current certificate being an encrypted digital signature of said current data block;
- issuing (140) an assertion of validity (ArVᵢ) as a function of said reference certificate (CertRᵢ) and said current certificate (CertCᵢ) when said reference certificate and said current certificate are identical;
- copying said current data block (DBlocᵢ) into the random-access memory of said device, when said assertion of validity (ArVᵢ) is positive.

2. Method for loading according to claim 1, **characterized in that** said step (120) for obtaining at least one reference certificate (CertCᵢ) of the current block of data (DBlocᵢ) comprises a step of searching for said reference certificate (CertRᵢ) within a list of resources (LisRes) as a function of said current address (Adrᵢ).

3. Method for loading according to claim 1, **characterized in that** said step (120) for obtaining at least one reference certificate (CertCᵢ) of the current block of data (DBlocᵢ) comprises a step for extracting said reference certificate (CertRᵢ) from the data of the current block of data (DBlocᵢ), this data being loaded at said current address (Adrᵢ).

4. Method for loading according to claim1, **characterized in** said step (120) for obtaining at least one reference certificate (CertCᵢ) of the current block of data (DBlocᵢ) comprises a step for loading said reference certificate (CertRᵢ) from an address (AdrCᵢ) of said reference certificate, said address (AdrCᵢ) of said reference certificate being obtained from a list of resources, of which at least one input of which is associated with said current address (Adrᵢ) and said address (AdrCᵢ) of said reference certificate.

5. Electronic module for loading a computer resource into a device comprising a processor and a random-access memory, said loading being done within said random-access memory of said device from a mass memory, said resource being recorded in said mass memory by means of at least one block of data, said module comprising means for:
- obtaining at least one address (Adrᵢ...) corresponding to at least one block of data (DBlocᵢ...) within which the resource is partially recorded;
said means for obtaining said at least one address (Adrᵢ...) implementing means:
- for intercepting a request for obtaining said resource;
- for determining said at least one address (Adrᵢ...) of said resource as a function of a list of resources (LisRes), said list of resources (LisRes) being recorded into a secured memory of said device;
- loading a current block of data (DBlocᵢ) as a function of said current address (Adrᵢ);
- obtaining at least one reference certificate (CertRᵢ) from the current block of data (DBlocᵢ), said reference certificate being an encrypted digital signature of said current data block;
- obtaining at least one current certificate (CertCᵢ) of the current block of data (DBlocᵢ), said current certificate being an encrypted digital signature of said current data block;
- issuing an assertion of validity (ArVᵢ) as a function of said reference certificate (CertRi) and said current certificate (CertCi), when said reference certificate and said current certificate are identical;
- copying said current data block (DBlocᵢ) into the random-access memory of said device.

6. Computer program product downloadable from a communications network and/or stored in a computer-readable carrier and/or executable by a microprocessor, **characterized in that** it comprises program code instructions for executing a method for loading according to claim 1, when it is executed on a computer.
